# EUROPEAN PATENT APPLICATION

(11) **EP 2 312 221 A2**
(43) Date of publication of application: **20.04.2011**
(21) Application number: 10186558.2
(22) Date of filing: 05.10.2010
(51) Int. Cl.: F24D 3/00, F24J 3/08

(54) **Geothermal heat exchange system**

(30) Priority: 06.10.2009 NL 1037366
(71) Applicant: CVH Group B.V., 5427 TK Rosmalen (NL)
(72) Inventor: Mijling, George Wilhelmus Theodorus, 5431 HL, Cuijk (NL)
(74) Representative: van Oeffelt, Abraham

(57) **Abstract**

A geothermal heat exchange system (3) comprises:
a primary fluid loop (30) including:
- a first heat exchange device (31) arranged at a first location (10A) below ground level to be in heat exchanging contact with earth;
- a second heat exchange device (34) arranged at an exploitation location;

a secondary ground water loop (40) including:
- a ground water suction line (42) arranged at said first location;
- a ground water discharge line (47) arranged at a second location (10B) at a suitable distance from said first location;
- a controllable pump (43) for pumping ground water from said ground water suction line to the ground water discharge line;

a temperature sensor (51) for sensing the temperature of said liquid pumped up from said first heat exchange device;
a control device (50) for controlling the pump operation, switching the controllable pump depending on the temperature signal received from the temperature sensor.

## Description

### FIELD OF THE INVENTION

The present invention relates in general to a system for using geothermal heat storage capacity in order to conserve energy.

### BACKGROUND OF THE INVENTION

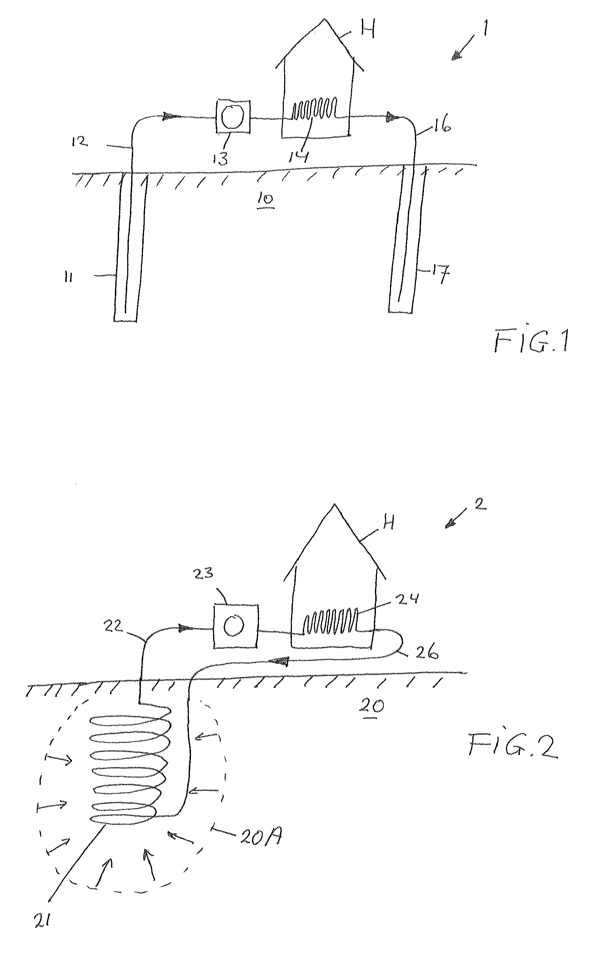

It is known that it is possible to use the earth as a heat storage system, i.e. as a thermal energy buffer and to use this buffer in order to heat or cool buildings such as houses or the like. Figure 1 schematically shows a first embodiment of such known system, generally indicated by reference numeral 1. A first pipe 11 extends vertically downwards into the earth, over a distance in the order of ten meters or more, in any case such as to extend into the ground water. A second similar pipe 17 is located at a certain distance from the first pipe 11. Using a conduit 12 and a pump 13, ground water is pumped up from the first pipe 11, passed through a heat exchanger 14, and discharged back into the ground water via an output conduit and second pipe 17. Overall, water pumped up from the ground water via the first pipe 11 is given back to the ground water via the second pipe 17. At a sufficiently deep level, the temperature of the water can be considered as being substantially constant, so that in summer time this water is cooler than the ambient outside atmosphere while in winter this water is warmer than the ambient outside atmosphere. Thus, in the summer this water can be used for cooling for instance a house H while in the winter this water can be used to heat the house H. To do so, the heat exchanger 14 may transfer its thermal energy (heat or cold) to a central heating system and/or to an airconditioning system of the house H.

One of the problems associated with the system schematically illustrated in figure 1 is that the pump 13 necessary for pumping the ground water must be a relatively powerful pump, requiring relatively much energy.

Figure 2 is a block diagram schematically illustrating another system 2 for utilizing the heat storage capacity of the earth. The heart of this system is a relatively large piece of pipe 21, for instance arranged in a coiled spiral shape, in good thermal contact with the earth at a sufficiently deep level. Via conduits 22 and 26, the spiral 21 is connected to a heat exchanger 24. In prior art systems, such spiral typical has a diameter in the order of 1m or more, and an axial length in the order of several meters. An important difference with respect to the system of figure 1 is that the system of figure 2 defines a closed circuit: while the system of figure 1 can only pump ground water, the spiral 21, conduit 22, heat exchanger 24 and conduit 26 form a closed system of conduits, which may contain water or any other suitable fluid. In use, the fluid in the spiral 21 exchanges heat with the earth that is contacting the spiral 21 (for which reason spiral 21 will in the following also be indicated as earth-contacted heat exchanger) while the fluid in the heat exchanger 24 will transfer heat or cold to a heating system or cooling system, typically a heat pump system, so that this heat or cold will be useful exploited (for which reason heat exchanger 24 will in the following also be indicated as exploitation heat exchanger).

An important characteristic of such closed circuit is that it offers relatively low flow resistance and hence a pump 23, only needing to drive the fluid through the open pipe lines in stead of having to drive liquid through earth, requires relatively little power. However, the system of figure 2 has a disadvantage of disturbing the temperature in an area 20A of the earth 20 in the direct neighbourhood of the earth-contacted heat exchanger 21. For instance, in winter, the fact that heat is being pumped from the earth-contacted heat exchanger 21 to the exploitation heat exchanger 24 unavoidably and necessarily results in a decrease of the temperature in the area 20A. As a result, the temperature of the fluid being pumped up by pump 23 is steadily decreasing over time, so that the useful effect of the heat output of the exploitation heat exchanger 24 is slowly decreasing with time.

### SUMMARY OF THE INVENTION

An important aim of the present invention is to overcome these disadvantages of prior art systems.

### BRIEF DESCRIPTION OF THE DRAWINGS

These and other aspects, features and advantages of the present invention will be further explained by the following description with reference to the drawings, in which same reference numerals indicate same or similar parts, and in which:
figures 1 and 2 schematically illustrate prior art systems;
figure 3 is a block diagram schematically illustrating a geothermal heat exchange system as proposed by the present invention.

### DETAILED DESCRIPTION OF THE INVENTION

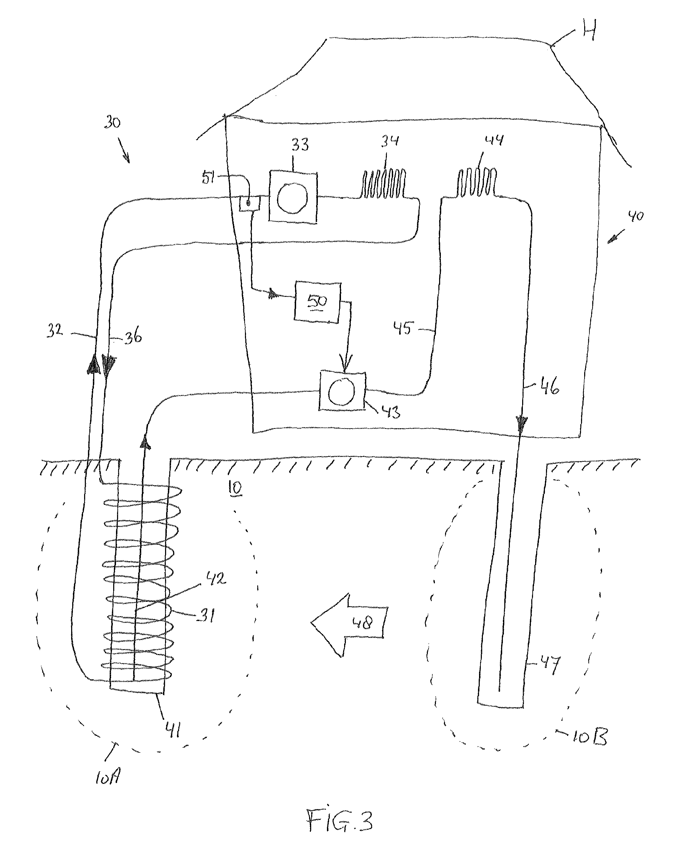

Figure 3 is a block diagram schematically illustrating a geothermal heat exchange system 3 according to the present invention. This system can be considered as being a combination of the two systems 1 and 2 described in the above with reference to figures 1 and 2, respectively, having the advantages of each of those individual systems but without having their disadvantages. The system 3 comprises a primary heat transfer system 30 and a secondary heat transfer system 40. The primary heat transfer system 30 is implemented as a closed circuit, comparable to the circuit of figure 2, and comprises an earth-contacted heat exchanger 31, a first conduit 32 connecting the output of this earth-contacted heat exchanger 31 to an input of an exploitation heat exchanger 34, a second conduit 36 connecting the output of the exploitation heat exchanger 34 to the input of the earth-contacted heat exchanger 31, and a fluid pump 33 for pumping the fluid around in this loop. As explained with reference to figure 2, this is a closed system so the fluid pump 33 can be a relatively low power pump.

The earth contacted heat exchanger 31 is implemented as a coiled spiral, spiralling around and being in contact with a first pipe 41 arranged in the earth 10, preferably extending vertically downwards. A second pipe 47 is mounted at a certain distance from the first pipe 41, this distance for instance being in the order of about 10 meters. The length of these pipes 41 and 47 is sufficiently long such as to be in contact with the ground water. An input line 42 extends into the first pipe 41 and is connected to an output line 46 extending into the second pipe 47. A controllable pump 43 is capable of pumping ground water up through the input line 42 and returning this water to the earth through the output line 46. Preferably, a second exploitation heat exchanger 44 is included in this pumping circuit in order to directly use the heat contained in this ground water. However, this is not the main function of the ground water being pumped up.

Primarily, only the first pump 33 is operative to pump fluid around in the closed system of the primary loop 30, so that this system operates in the same way as the system 2 described with reference to figure 2. Under normal circumstances, this will be sufficient. However, under somewhat more extreme circumstances, for instance in a severe winter when the area 10A around the earth-contacted heat exchanger 31 is cooling down so that the heating efficiency of the exploitation heat exchanger 34 is reducing, or, conversely, during hot summertime when the area 10A around the earth-contacted heat exchanger 31 is warming up so that the cooling efficiency of the first exploitation heat exchanger 34 is being reduced, the secondary heat pumping loop 40 will be used. For this purpose, a control device 50, for instance implemented as a suitably programmed microprocessor or the like, switches the second pump 43 on so that ground water is being pumped up from the first pipe 41 and returned through the second pipe 47. In this respect, reference is made to the description with respect to figure 1. The basic effect of this pumping action is that ground water is being transported (48) from the second pipe 47 towards the first pipe 41, transporting heat from the more remote area 10B around second pipe 47 towards the area 10A around first pipe 41. As a result, the undesirable effect of warming (or cooling) of this area around the first pipe 41 (see area 20A in figure 2) is avoided or at least significantly reduced.

For detecting whether or not it is necessary to switch on the second pump 43, a temperature sensor 51 is associated with the primary loop 30, for instance arranged with first conduit 32, or with the input or output of first pump 33, or even with the exploitation heat exchanger 34, in order to sense the temperature of the fluid being pumped up from the earth-contacted heat exchanger 31. The control device 50 receives the output signal from this temperature sensor 51. When the control device 50 detects that the temperature of the liquid rises to exceed a first predetermined threshold, or drops to exceed a second predetermined threshold, the control device 50 switches the second pump 43 on. As soon as the control device 50 detects that the temperature reading is within the operative range determined by the first and second thresholds, the control device 50 switches the second pump 43 off again. Thus, the second pump 43, which is a relatively high power pump, is switched on only when needed. Thus, the system as a whole requires less power than the prior art system of figure 1. Further, since the heat or cold from the area 10A is not depleted, the spiral 31 can have a reduced size as compared to the system of figure 2.

Thus, the invention provides a geothermal heat exchange system 3 comprising:
a primary fluid loop 30 including:
   - a first heat exchange device 31 arranged at a first location 10A below ground level to be in heat exchanging contact with earth;
   - a second heat exchange device 34 arranged at an exploitation location;
a secondary ground water loop 40 including:
   - a ground water suction line 42 arranged at said first location;
   - a ground water discharge line 47 arranged at a second location 10B at a suitable distance from said first location;
   - a controllable pump 43 for pumping ground water from said ground water suction line to the ground water discharge line;
a temperature sensor 51 for sensing the temperature of said liquid pumped up from said first heat exchange device;
a control device 50 for controlling the pump operation, switching the controllable pump depending on the temperature signal received from the temperature sensor.

The invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

## Claims

1. Geothermal heat exchange system (3) for utilizing earth heat and/or earth heat storage capacity to heat or cool objects such as a house (H), the system comprising:
a primary fluid loop (30) including:
- a first heat exchange device (31) arranged at a first location (10A) below ground level to be in heat exchanging contact with earth;
- a second heat exchange device (34) arranged at an exploitation location, for instance in a house (H);
- a first fluid conduit (32) for conducting fluid from an output end of the first heat exchange device (31) to an input end of the second heat exchange device (34);
- a second fluid conduit (32) for conducting fluid from an output end of the second heat exchange device (34) to an input end of the first heat exchange device (31);
- a suitable liquid filled in the loop defined by the first and second heat exchange devices and the first and second fluid conduits;
- a first fluid pump (33) for pumping said liquid around in said loop to transport heat from the first heat exchange device (31) to the second heat exchange device (34) or vice versa;
a secondary ground water loop (40) including:
- a ground water suction line (42) arranged at or close to said first location below ground level, in communication with ground water;
- a ground water discharge line (47) arranged at a second location (10B) at a suitable distance from said first location (10A);
- a connection line (45) connecting the ground water suction line (42) to the ground water discharge line (47);
- a controllable pump (43) for pumping ground water from said ground water suction line (42) to the ground water discharge line (47);
a temperature sensor (51) for sensing the temperature of said liquid pumped up from said first heat exchange device (31);
a control device (50) having a signal input coupled to the temperature sensor (51) for receiving a temperature signal and having a control output coupled to the controllable pump (43) for controlling the pump operation;
wherein the control device (50) is designed to switch the controllable pump (43) ON or OFF depending on the temperature signal received.

2. Heat exchange system according to claim 1, wherein the control device (50) is designed to compare the measured temperature with a high temperature threshold, and wherein the control device (50) is designed to switch the controllable pump (43) ON if the measured temperature is above the high temperature threshold and to switch the controllable pump (43) OFF if the measured temperature is below the high temperature threshold.

3. Heat exchange system according to claim 1, wherein the control device (50) is designed to compare the measured temperature with a low temperature threshold, and wherein the control device (50) is designed to switch the controllable pump (43) ON if the measured temperature is below the low temperature threshold and to switch the controllable pump (43) OFF if the measured temperature is above the low temperature threshold.

4. Heat exchange system according to claim 1, wherein the control device (50) is designed to compare the measured temperature with a high temperature threshold and with a low temperature threshold, and wherein the control device (50) is designed to switch the controllable pump (43) ON if the measured temperature is above the high temperature threshold or below the low temperature threshold and to switch the controllable pump (43) OFF if the measured temperature is between the high temperature threshold and the low temperature threshold.

5. Heat exchange system according to any of the previous claims, further comprising a filter pipe (41) arranged substantially vertically in the earth (10), wherein the ground water suction line (42) is arranged within the filter pipe (41) and wherein the first heat exchange device (31) is comprises a coiled tube section spiralling around the filter pipe (41).

6. Heat exchange system according to any of the previous claims, further comprising a third heat exchange device (44) in said connection line (45) of the ground water loop (40), arranged at an exploitation location, for instance in the same house (H).

7. Heat exchange system according to claim 6, wherein the third heat exchange device (44) is connected in series with or in parallel with the second heat exchange device (34) to provide heat to or withdraw heat from the same heating or cooling system.

8. Heat exchange system according to any of the previous claims, wherein said temperature sensor (51) is mounted to sense the temperature of the first fluid conduit (32).

9. Heat exchange system according to claim 8, wherein said temperature sensor (51) is mounted to sense the temperature of the first fluid conduit (32) at the input of the first fluid pump (33) or at the output of the first fluid pump (33) or at the input of the second heat exchange device (34).

10. Heat exchange system according to any of the previous claims, wherein said controllable pump (43) is associated with said connection line (45) or with said ground water suction line (42).
